# EUROPEAN PATENT SPECIFICATION

(11) **EP 1 494 014 B1**
(45) Date of publication and mention of the grant of the patent: **14.11.2007**
(21) Application number: 04253478.4
(22) Date of filing: 10.06.2004
(51) Int. Cl.: G01N 21/90, G01N 21/21

(54) **System with a ferro-electric liquid crystal for two-fold optical inspection of containers**
Gerät mit einem ferro-elektrischen Flüssigkristall zur zweifachen optischen Inspektion von Behältern
Système comprenant un cristal liquide ferro-électrique pour l'inspection optique double des conteneurs

(30) Priority: 30.06.2003 US 610417
(43) Date of publication of application: 05.01.2005
(73) Proprietor: Emhart Glass S.A., 6330 Cham (CH)
(72) Inventor: Furnas, William J., Elmira New York 14901 (US)
(74) Representative: Warren, Anthony Robert

(56) References cited:
- DE-A- 10 164 058
- DE-C- 4 343 457
- DE-U- 20 108 131
- GB-A- 2 183 332
- US-A- 4 763 992
- PATENT ABSTRACTS OF JAPAN vol. 007, no. 113 (P-197), 18 May 1983 (1983-05-18) & JP 58 035425 A (CANON KK), 2 March 1983 (1983-03-02)
- PATENT ABSTRACTS OF JAPAN vol. 1996, no. 01, 31 January 1996 (1996-01-31) & JP 07 248489 A (NIPPON HOSO KYOKAI), 26 September 1995 (1995-09-26)

## Description

The present invention relates to machines which have a camera based inspection system for inspecting containers such as bottles for defects.

Machines for inspecting glass bottles conduct a great variety of inspections. More and more of these inspections are conducted using camera technology, and each camera adds substantial cost to the system.

DE-A-10,164,058 discloses one such machine, generally of the type defined in the preamble of claim 1, which comprises a conveyor for supporting a container at an inspection location, an inspection system for inspecting a container when at the inspection location including a camera having an imaging surface on one side of the container location, a light source on the other side of the container location to direct light towards the camera, and a first polarizer between the light source and the container location.

In the latter prior art, first and second inspections are carried out simultaneously by respective first and second cameras having their imaging surfaces on one side of the container location, and a beam splitter divides the light into two beams which are directed one to each camera.

In the inspection system disclosed in DE-U-20,108,131, the latter imaging surfaces comprise adjacent sensor elements of a common CCD camera. This system requires additional optical elements, and the camera must be large enough to capture the two beams next to each other.

GB-A-2,183,332 discloses a cinefilm fault detector which detects deviations in the position of a reflective film surface indicative of a crease fault in the film. In one embodiment, a photodetector is used alternately to detect two orthogonally polarized beams reflected by the film surface and a comparator compares the wavelengths of the two beams to give a position signal.

DE-C-4,343,957 discloses a device for detecting transparent objects. Polarizing means are located between a light transmitter and the object to be detected, and between the object and the receiver. The polarization effect of the polarizing means can be adjusted via an evaluation unit to influence the polarization characteristics of the transmitted light beam.

It is an object of the present invention to provide a system for inspecting glass containers which will enable a single camera to carry out two inspections.

According to the present invention, there is provided a machine for inspecting containers as defined in the characterising part of claim 1.

The present invention will now be described with reference to the accompanying drawings which illustrate a presently preferred embodiment incorporating the principals of the invention, and in which:
Figure 1 is a schematic illustration of an inspection machine made in accordance with the teachings of the present invention; and
Figure 2 is a schematic diagram for a temperature correction circuit for the voltage applied in Figure 1.

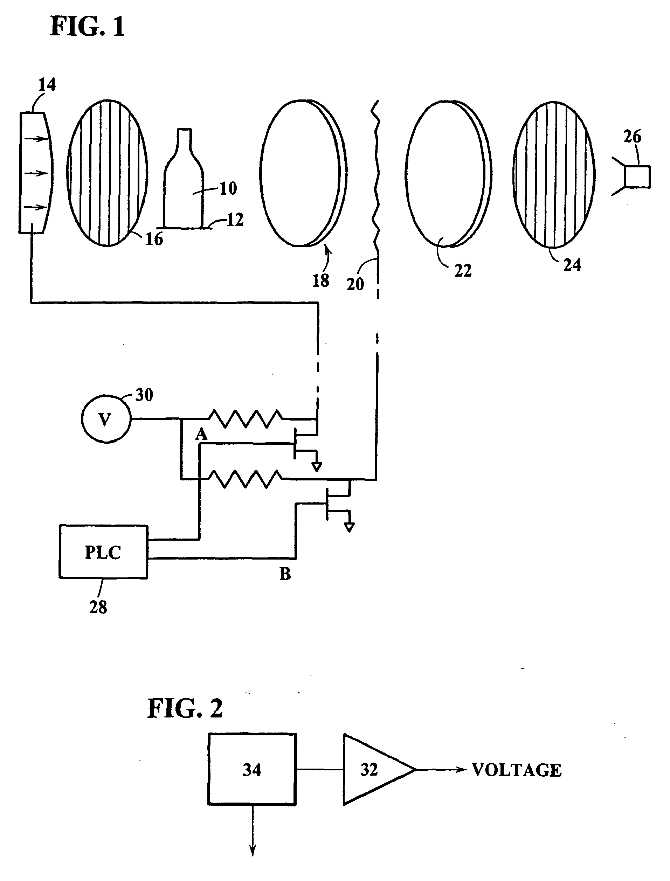

Figure 1 shows a bottle 10 being conveyed through an inspection station of an inspection machine by a conveyor 12. At this inspection station, light from a source of light 14 passes through a first polarizer 16, and this polarized light passes through the bottle in a direction perpendicular to the axis of the bottle. The light then passes through a first electrode surface 18, a FLC 20 (ferroelectric liquid crystal device), a second electrode surface 22, and a second polarizer 24 which has the same polarity as the first polarizer 16, and images on the imaging surface of a camera 26.

The operation of the electrode surfaces is controlled by outputs from a PLC (programmable loop controller) 28 which activates either circuits A or B to apply a voltage V from a source 30 to either the first or second electrode surface. When A is activated, the camera imaging surface will be illuminated with bright polarized light (the electrode surfaces and the FLC define the same polarity as the first and second polarizers), so that the side wall of the bottle can be inspected. When B is activated, the camera image will be black (the electrode surfaces and the FLC define a 90° rotated polarity), and as a result light will be blocked except where stress in the bottle due to a defect will change the polarity of the light so that a portion of the light passes through the second polarizer and strikes the camera imaging surface indicating a defect.

Figure 2 illustrates a temperature correction circuit for adjusting the relative polarization of the system due to environmental temperature variations. Plants where this equipment will be used often have a range of environmental temperatures that can exceed 50°F. It has been found that the contrast ratio of the system (the ratio of light mode to dark mode) is a function of temperature. To correct the error that results from these variations, an amplifier 32 is used which receives a temperature input from a temperature sensor 34 and which will output a voltage that changes with temperature in a way that will maintain the contrast ratio as high as possible over the operating temperature range. This can be effected in software or hardware.

## Claims

1. A machine for inspecting a container comprising
a conveyor for supporting a container (10) at an inspection location,
an inspection system for inspecting a container (10) when at the inspection location including
a camera (26) having an imaging surface on one side of the container location,
a light source (14) on the other side of the container location to direct light towards said camera,
a first polarizer (16) between said light source and the container (10) location, and
a second polarizer (24) between the container and said camera,
**characterised in that** the inspection system further comprises
a first electrode surface (18) on the one side of the container (10) location between the container location and said camera (26),
a ferroelectric liquid crystal device (20) on the one side of the container (10) location between the first electrode surface (18) and said camera (26),
a second electrode surface (22) on the one side of the container (10) location between the ferroelectric liquid crystal device (20) and said camera (26),
said second polarizer (24) being located between said second electrode surface (22) and said camera (26), and
controller means (28) for alternately operating said first (18) and second (22) electrode surfaces.

2. A machine for inspecting a container according to claim 1, further comprising means for relative rotation of polarized light by said first (18) and second (22) electrode surfaces and said ferroelectric liquid crystal device (20) as a function of temperature.

## Patentansprüche

1. Maschine zum Prüfen eines Behälters, die aufweist:
einen Förderer, der einen Behälter (10) an einemPrüfort stützt;
ein Prüfsystem zum Prüfen eines Behälters (10), der sich am Prüfort befindet, mit:
einer Kamera (26) mit einer Bildaufnahmefläche auf einer Seite des Behälterorts,
einer Lichtquelle (14) auf der anderen Seite des Behälterorts, mit der Licht auf die Kamera richtbar ist,
einem ersten Polarisator (16) zwischen der Lichtquelle und dem Ort des Behälters (10), und
einem zweiten Polarisator (24) zwischen dem Behälter und der Kamera;
**dadurch gekennzeichnet, dass** das Prüfsystem weiterhin aufweist:
eine erste Elektrodenfläche (18) auf der einen Seite des Orts des Behälters (10) zwischen dem Behälterort und der Kamera (26);
eine ferroelektrische Flüssigkristall-Einrichtung (20) auf der einen Seiten des Orts des Behälters (10) zwischen der ersten Elektrodenfläche (18) und der Kamera (26);
eine zweite Elektrodenfläche (22) auf der einen Seite des Orts des Behälters (10) zwischen der ferroelektrischen Flüssigkristalleinrichtung (20) und der Kamera (26),
wobei der zweite Polarisator (24) zwischen der zweiten Elektrodenfläche (22) und der Kamera (26) liegt; sowie
eine Steuerung (28) zum abwechselnden Ansteuern der ersten und der zweiten Elektrodenfläche (18 bzw. 22).

2. Maschine zum Prüfen eines Behälters nach Anspruch 1 weiterhin mit einer Einrichtung, mit der polarisiertes Licht von der ersten und der zweiten Elektrodenfläche (18 bzw. 22) und der ferroelektrischen Flüssigkristall-Einrichtung (20) als Funktion der Temperatur relativ zueinander drehbar ist.

## Revendications

1. Machine pour inspecter un récipient comprenant :
un transporteur pour supporter un récipient (10) à un emplacement d'inspection,
un système d'inspection pour inspecter un récipient (10) lorsqu'il se trouve à l'emplacement d'inspection, comprenant :
une caméra (26) ayant une surface de formation d'image d'un côté de l'emplacement de récipient,
une source de lumière (14) de l'autre côté de l'emplacement de récipient pour diriger une lumière vers ladite caméra,
un premier polariseur (16) entre ladite source de lumière et l'emplacement de récipient (10), et
un deuxième polariseur (24) entre le récipient et ladite caméra,
**caractérisée en ce que** le système d'inspection comprend en outre :
une première surface d'électrode (18) dudit un côté de l'emplacement de récipient (10) entre l'emplacement de récipient et ladite caméra (26),
un dispositif à cristaux liquides ferroélectrique (20) dudit un côté de l'emplacement de récipient (10) entre la première surface d'électrode (18) et ladite caméra (26),
une deuxième surface d'électrode (22) dudit un côté de l'emplacement de récipient (10) entre le dispositif à cristaux liquides ferroélectrique (20) et ladite caméra (26),
ledit deuxième polariseur (24) étant situé entre ladite deuxième surface d'électrode (22) et ladite caméra (26), et
des moyens formant contrôleur (28) pour actionner alternativement lesdites première (18) et deuxième (22) surfaces d'électrode.

2. Machine pour inspecter un récipient selon la revendication 1, comprenant en outre des moyens pour une rotation relative de la lumière polarisée par lesdites première (18) et deuxième (22) surfaces d'électrode et ledit dispositif à cristaux liquides ferroélectrique (20) en fonction de la température.
